# EUROPEAN PATENT APPLICATION

(11) **EP 4 831 776 A1**
(43) Date of publication of application: **28.10.2026**
(21) Application number: 26170515.6
(22) Date of filing: 02.04.2026
(51) Int. Cl.: G06F 3/01, G06T 3/053

(54) **METHOD, APPARATUS, DEVICE, MEDIUM, AND PRODUCT FOR RENDERING IMAGE**

(30) Priority: 07.04.2025 CN 202510429224
(71) Applicant: Beijing Zitiao Network Technology Co., Ltd., Beijing 100190 (CN)
(72) Inventor: Wei, Xinyong, Chaoyang District, Beijing, 100028 (CN)
(74) Representative: Grünecker Patent- und Rechtsanwälte PartG mbB

(57) **Abstract**

Embodiments of the present disclosure relate to a method, an apparatus, a device, a medium, and a product for rendering an image. The method includes obtaining (202), in response to a change in a position of a user, a rendering instruction for a two-dimensional image on a panel viewed by the user in a virtual space. The method further includes determining (204) a distance from the user to the panel. The method further includes determining (206), based at least on the distance, a magnification by which a resolution of the two-dimensional image is to be adjusted. The method further includes re-rendering (208) the two-dimensional image for display on the panel based on the rendering instruction and the magnification.

## Description

### FIELD

Embodiments of the present disclosure generally relate to the field of computer graphics, and in particular, to a method, an apparatus, a device, a medium, and a product for rendering an image.

### BAC KGROUND

With the rapid development of smart devices and the advancement of computer graphics technology, users' requirements for visual experience continue to improve. The popularization of application scenarios such as mobile terminals, augmented reality (AR), and virtual reality (VR) has positioned high-quality image rendering technology as crucial for improving user experience. Modern users not only focus on the performance of devices, but also expect higher clarity of interfaces, smoother animation effects, and more realistic visual presentation.

At the same time, the hardware resources of mobile devices are limited compared to desktop terminals. Therefore, how to optimize rendering efficiency and reduce computing overhead while ensuring high-definition image quality has become an important research direction in the industry. In addition, with the increasing demand for multitasking and cross-platform interaction, the fusion rendering of different types of interface content (such as 2 dimensional (D), user interface (UI) and 3D scenes) has become the trend of current technological development.

### SUMMARY

Embodiments of the present disclosure provide a method, an apparatus, a device, a medium, and a product for rendering an image.

A first aspect of the present disclosure provides a method for rendering an image. The method includes obtaining, in response to a change in a position of a user, a rendering instruction for a two-dimensional image on a panel viewed by the user in a virtual space. The method further includes determining a distance from the user to the panel. The method further includes determining, based at least on the distance, a magnification by which a resolution of the two-dimensional image is to be adjusted. The method re-renders the two-dimensional image for display on the panel based on the rendering instruction and the magnification.

A second aspect of the present disclosure provides an apparatus for rendering an image. The apparatus includes a rendering instruction obtaining module configured to obtain, in response to a change in a position of a user, a rendering instruction for a two-dimensional image on a panel viewed by the user in a virtual space; a distance determining module configured to determine a distance from the user to the panel; a resolution adjusting module configured to determine, based at least on the distance, a magnification by which a resolution of the two-dimensional image is to be adjusted; and an image displaying module configured to re-render the two-dimensional image for display on the panel based on the rendering instruction and the magnification.

A third aspect of the present disclosure provides an electronic device. The electronic device includes at least one processor; and a storage apparatus for storing at least one program that, when executed by the at least one processor, causes the at least one processor to perform the method according to the first aspect of the present disclosure.

A fourth aspect of the present disclosure provides a computer-readable storage medium. The computer-readable storage medium has a computer program stored thereon, wherein the computer program, when executed by a processor, implements the method according to the first aspect of the present disclosure.

A fifth aspect of the present disclosure provides a computer program product. The computer program product includes a computer program that, when executed by a processor, implements the method according to the first aspect of the present disclosure.

It would be appreciated that the content described in this Summary section is neither intended to identify key or essential features of the embodiments of the present disclosure, nor is it intended to limit the scope of the present disclosure. Other features of the present disclosure will be readily envisaged through the following description.

### BRIEF DESCRIPTION OF THE DRAWINGS

The above and other objects, features, and advantages of the present disclosure will become more apparent by describing the exemplary embodiments of the present disclosure in more detail with reference to the drawings. In the exemplary embodiments of the present disclosure in which the same reference numerals typically represent the same components.
Fig. 1 illustrates a schematic diagram of an example environment in which a device and/or method of some embodiments of the present disclosure may be implemented;
Fig. 2 illustrates a schematic diagram of an example method for rendering an image according to some embodiments of the present disclosure;
Fig. 3 illustrates a flowchart of an example process for rendering an image according to some embodiments of the present disclosure;
Fig. 4 illustrates a schematic diagram of an example of a high-definition strategy in rendering an image according to some embodiments of the present disclosure;
Fig. 5 illustrates a schematic diagram of an example of high-definition drawing in rendering an image according to some embodiments of the present disclosure;
Fig. 6 illustrates a schematic diagram of an example of high/low-definition composition in rendering an image according to some embodiments of the present disclosure;
Fig. 7 illustrates a flowchart of an example method for resolution magnification adjustment according to some embodiments of the present disclosure;
Fig. 8 illustrates a schematic diagram of an example of a field of view in a vertical viewing angle according to some embodiments of the present disclosure;
Fig. 9 illustrates a schematic diagram of an example of a high-definition area range in a vertical viewing angle according to some embodiments of the present disclosure;
Fig. 10 illustrates a schematic block diagram of an apparatus for rendering an image according to some embodiments of the present disclosure; and
Fig. 11 illustrates a schematic block diagram of an example device suitable for performing multiple embodiments of the present disclosure.

### DETAILED DESCRIPTION OF EMBODIMENTS

It would be appreciated that the data involved in the technical solution (including but not limited to the data itself, acquisition or use of the data) shall comply with requirements of corresponding laws, regulations, and related provisions.

It would be appreciated that before the use of the technical solution disclosed in the embodiments of the present disclosure, the user shall be informed of the type, range of use, use scenarios, etc., of personal information involved in the present disclosure in an appropriate manner and the authorization of the user shall be obtained in accordance with related laws and regulations.

For example, when an active request of the user is received, prompt information is sent to the user to clearly inform the user that the requested operation will require access to and use of the user's personal information. In this way, the user may independently choose, based on the prompt information, whether to provide the personal information to software or hardware, such as an electronic device, an application, a server, or a storage medium, that performs the operations of the technical solution of the present disclosure.

As an optional but non-limiting implementation, in response to receiving the active request from the user, the prompt information may be sent to the user in the form of, for example, a pop-up window, in which the prompt information may be presented in text. In addition, the pop-up window may also include a selection control for the user to choose whether to "agree" or "disagree" to provide the personal information to the electronic device.

It would be appreciated that the above process of notifying and obtaining user authorization is only illustrative and does not limit the implementations of the present disclosure, and other manners that comply with the related laws and regulations may also be applied in the implementations of the present disclosure.

The embodiments of the present disclosure will be described in more detail below with reference to the drawings. Although some embodiments of the present disclosure are shown in the drawings, it would be appreciated that the present disclosure may be implemented in various forms and should not be construed as limited to the embodiments set forth herein. On the contrary, these embodiments are provided for a more thorough and complete understanding of the present disclosure. It would be appreciated that the drawings and embodiments of the present disclosure are only for illustrative purposes and are not intended to limit the protection scope of the present disclosure.

In the description of the embodiments of the present disclosure, the term "include/comprise" and similar terms thereto should be construed as open-ended inclusions, that is, "include/comprise but not limited to". The term "based on" should be construed as "at least partially based on". The term "an embodiment" or "the embodiment" should be construed as "at least one embodiment". The terms "first", "second", etc. may refer to different or same objects. Other explicit and implicit definitions may also be included below.

As mentioned above, with the popularization of smart devices and the advancement of computer graphics technology, users' demand for high-quality vision is increasing day by day. In order to provide clearer and smoother interface display, improving the rendering quality of 2D UI has become an important technical challenge. However, on some electronic devices, it is still difficult to achieve high-quality rendering while maintaining high efficiency.

Generally, 2D UI rendering of mobile devices relies on a graphics rendering engine of a system, but in a practical application scenario, the 2D UI may need to be displayed or transformed in a 3D space. Since a traditional rendering manner may cause unchanged resolution or blurred images when handling the fusion of 2D UI and 3D scenes, coupled with the limitation of computing resources of mobile devices, there are still many challenges in achieving efficient and high-definition user interface rendering.

For example, in a multitasking operating system supporting spatial computing, a user may run multiple 2D applications simultaneously and project their interfaces into the 3D space, such as displaying multiple floating windows on a VR device or a holographic projection interface. However, since the 2D UI needs a projection transformation, the resolution may be reduced due to perspective scaling, resulting in unclear texts and interface elements. Moreover, when displaying a menu, a notification, or an interactive button in the virtual space, since these UI elements may remain unchanged when the user watches them from different viewing angles and different distances, when the currently rendered user interface is close to the user, it may cause blurred UI details and difficult-to-recognize fonts, thus affecting the user experience.

To this end, an embodiment of the present disclosure proposes a method for rendering an image. In this method, a computing device determines whether a position of a user has changed. When the user's position changes, the computing device may obtain a rendering instruction for a two-dimensional image on a panel viewed by the user in a virtual space. Then the computing device determines a distance from the user to the panel. Then the computing device determines a magnification by which a resolution of the two-dimensional image is to be adjusted based at least on the distance. Next, the computing device may use the rendering instruction and the magnification to re-render the two-dimensional image for display on the panel by the user. By this method, the magnification of the resolution may be dynamically adjusted when the user is at different distances and different angles from the panel, ensuring that the focal area of the user when viewing the panel is always clear without jaggedness, thus improving the user experience.

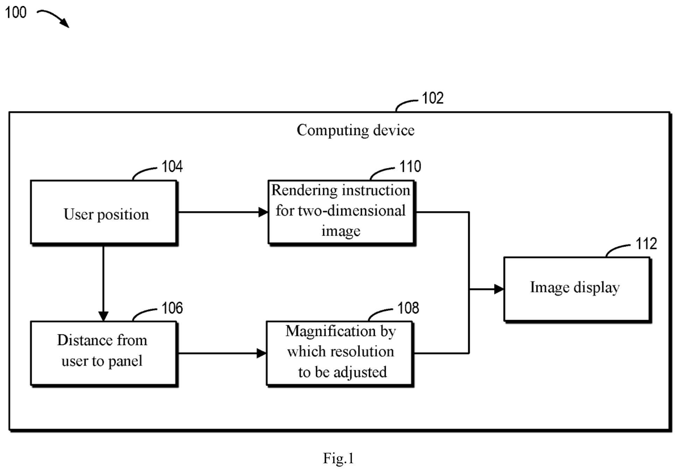

The embodiments of the present disclosure will be further described in detail below with reference to the drawings. Fig. 1 shows an example environment in which a device and/or method of the embodiments of the present disclosure may be implemented. In an environment 100, a computing device 102 may render images at different resolutions by a preset operation.

Examples of the computing device 102 include, but are not limited to, a head-mounted device (such as VR glasses), a personal computer, a server computer, a handheld or laptop device, a mobile device (such as a mobile phone, a personal digital assistant (PDA), a media player, etc.), a multi-processor system, a consumer electronic product, a minicomputer, a mainframe computer, a distributed computing environment including any of the above systems or devices, etc.

As shown in Fig. 1, a user may view objects in a virtual three-dimensional world. When the user moves, a change in a user position 104 needs to be detected. In an example, when the computing device 102 is a head-mounted device, it may acquire user position data and detect a change in the user's position in the three-dimensional virtual space. In another example, the computing device 102 may also receive transmitted user position data from other devices and then detect the change in the user position 104. When the user position 104 changes, the computing device 102 may obtain a rendering instruction 110 for a two-dimensional image on a panel viewed by the user in the virtual space. The three-dimensional virtual space at this time may be a virtual environment constructed by, for example, VR glasses, an AR device, or other immersive display devices.

Then, the computing device 102 may further determine the panel that the user is viewing. The panel is a window for presenting information. For example, in the three-dimensional space, one panel may be used to present one 2D application. The computing device 102 may determine a distance 106 from the user to the panel. Therefore, the obtained distance 106 from the user to the panel may be used to determine an adjustment of the magnification of the resolution and to prepare for image rendering. Additionally, the computing device 102 may further determine a target angle between the user's line of sight and the panel. For example, the user's line of sight may be a ray emitted from a midpoint between the user's eyes in the three-dimensional virtual world to the display panel, and an angle between the ray and the panel may be used as the target angle.

Next, the computing device 102 may use the determined distance 106 from the user to the panel to determine a magnification 108 of the resolution to be adjusted for the two-dimensional image displayed on the panel. Additionally, the computing device 102 may also use the distance 106 from the user to the panel and the target angle between the user's line of sight and the panel to determine the magnification 108 of the resolution to be adjusted for the two-dimensional image displayed on the panel. In this process, the computing device 102 may determine an intersection point of the user's line of sight and the display panel. The user's line of sight at this time is a ray emitted from the midpoint between the user's eyes in the three-dimensional virtual world to the display panel, and this ray may be tracked based on an eye tracking technology and acquired by the computing device. The intersection point of this ray and the display panel is the focal point of the user's eyes.

In an example, the computing device 102 may determine, in the panel, an area centered on this point and including certain pixels, and the size and shape of this area may be set to any suitable shape and size. Additionally, the size of the area is determined by the distance to the panel and display parameters of the device. Therefore, the computing device 102 may determine an area including a predetermined number of pixel points centered on the intersection point and use the area as a reference area. In this area, local sampling will be performed to obtain image details of this area. For example, if the selected sampling area comprises 200 pixels, it means that a rectangular area of 200 pixels by 200 pixels near the ray point will be selected for image sampling.

After the local sampling area is determined, the distance 106 from the user to the panel or further in combination with the target angle between the user's line of sight and the panel may be used to map this area from the virtual space to the actual display screen. An image area projected on the screen may have its actual display size changed due to factors such as the viewing distance, screen size, and resolution. In order to precisely adjust the display effect of the image, it is necessary to calculate a ratio between the projection area and the total screen area. For example, if the projection area comprises 300*200 pixels and the screen resolution is 1920*1080 pixels, the ratio may be calculated as (300*200) divided by (1920*1080). Finally, the computing device determines the magnification 108 of the resolution to be adjusted based on the proportion of the screen occupied, the resolution of the image, and the resolution of the screen. Any suitable manner may be used to determine the magnification of the resolution to be adjusted using the proportion of the screen occupied, the resolution of the image, and the resolution of the screen, which is not limited by the present disclosure.

Finally, the computing device 102 re-renders the two-dimensional image based on the rendering instruction 110 for the two-dimensional image and the calculated magnification 108 of the resolution to be adjusted for image display 112 on the panel. In an example, the entire two-dimensional image is re-rendered at the magnification 108 of the resolution to be adjusted. In another example, the resolution may only be adjusted for the area of interest that the user is gazing at, while the previous resolution is maintained for other areas. The area of interest is also referred to as a target area. For example, when the angle between the user's line of sight and the panel is 90 degrees, that is, when the user is facing the panel, an emission-shaped cone may be formed by expanding a certain angle outward from the gaze point as the starting point and centered on the line of sight, and there may be an interaction area between the cone and the panel, and at this time, the interaction area is a circle. When the angle between the user's line of sight and the panel is not 90 degrees, the target area on the panel at this time is an ellipse.

The computing device 102 uses the resolution of the certain magnification to render a target image portion in the two-dimensional image corresponding to the target area based on the rendering instruction. This image portion is the portion that the user's current line of sight mainly focuses on, so higher definition may be used to satisfy the user's viewing experience. In addition, the computing device 102 may use the previous resolution and rendering instruction to render the remaining image portion in the two-dimensional image. Finally, the target image portion and the remaining portion are combined to generate the final two-dimensional image. Then, the computing device 102 performs spatial effect processing and sampling on the two-dimensional image, enhances the visual effect of the image by simulating physical phenomena in the real world, and at the same time optimizes the rendering technique through the sampling technology. The spatial effect processing improves the immersion and realism of the image, and the sampling technology ensures more accurate presentation of these effects in case of limited resources.

Through this method, the computing device determines the distance and line-of-sight angle between the user and the panel by obtaining the change in the position of the user in the virtual space, thereby adjusting the resolution of the two-dimensional image displayed on the panel, and finally improves the immersion and realism of the image by re-rendering, which effectively improves the utilization of system resources and image rendering efficiency while satisfying the user's visual needs, and improves the user experience.

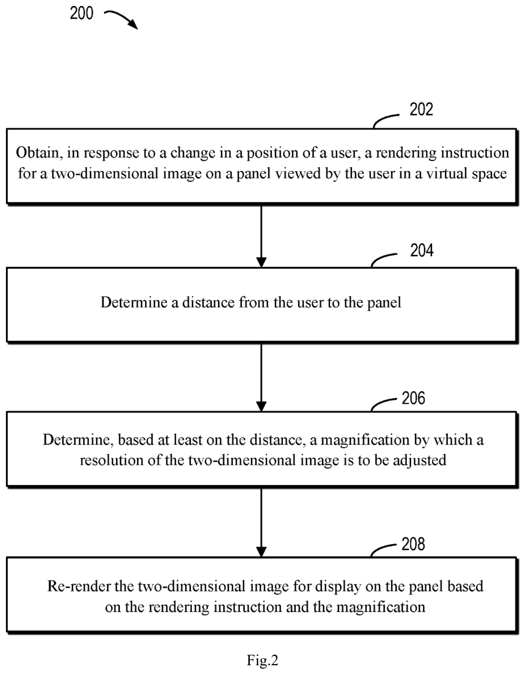

The schematic diagram of the example environment in which the device and/or method of some embodiments of the present disclosure may be implemented is described above with reference to Fig. 1, and the schematic diagram of the example method for rendering an image according to some embodiments of the present disclosure is described below with reference to Fig. 2. The method in Fig. 2 may be performed by the computing device 102 in Fig. 1 or any suitable computing device.

As shown in Fig. 2, in an example method 200, at block 202, the computing device 102 obtains, in response to a change in a position of the user a rendering instruction of a two-dimensional image on a panel viewed by the user in a virtual space. The change in the position of the user usually means that the position, direction, viewing angle, etc., have changed relative to the virtual space or the real space in an environment such as virtual reality (VR), augmented reality (AR), etc. In an example, the computing device receives data tracked and detected in real time by sensors (such as an accelerometer, a gyroscope, etc.) to determine the user's movement. When the computing device detects that the user's position in the virtual space has changed, the system needs to adjust the image content displayed to the user. The computing device 102 may obtain the rendering instruction for the two-dimensional image, which describes how to draw the image of the panel in the virtual environment that the user can see.

At block 204, the computing device 102 determines a distance from the user to the panel. In order to adjust the rendering of the image, the computing device 102 may calculate the distance from the user to the panel. This distance affects the clarity, resolution, and display range of the content. For example, when the user is closer to the panel and observes more details of the pattern on the panel, the resolution of the pattern on the panel should be improved at this time to avoid the user seeing jaggedness of pixels in the pattern. When the user is farther away from the panel, the resolution may be appropriately reduced to save performance overhead. At the same time, the distance between the user and the panel also greatly affects the field of view of the user observing the panel. When the user's line-of-sight angle remains unchanged, when the user is close to the panel, the range of the panel observed in the field of view becomes smaller, and when the user is away from the panel, the range of the panel observed in the field of view becomes larger.

At block 206, the computing device 102 determines, based at least on the distance, a magnification by which a resolution of the two-dimensional image is to be adjusted. After obtaining the distance from the user to the panel, the distance may be further used to calculate an adjustment magnification or an adjustment ratio of the resolution of the two-dimensional image for the user at this time.

In some embodiments, the computing device 102 may use an algorithm or formula related to the distance to calculate, for the user, the magnification by which the resolution of the two-dimensional image is to be adjusted. In addition, the angle between the user's line of sight and the panel also affects the display of the panel in the user's line of sight to some extent. When the angle between the user's line of sight and the panel is not 90 degrees, due to the deviation of the line of sight, the displayed area may lack details, and the computing device needs to optimize the display area with techniques such as perspective correction, dynamic resolution adjustment, and local high-definition rendering to ensure that the user obtains the best visual experience. Therefore, in some embodiments, the computing device further determines a target angle between the line of sight of the user and the panel. Then, the computing device 102 uses the distance from the user to the panel and the target angle to calculate, for the user, the magnification by which the resolution of the two-dimensional image is to be adjusted.

When using the distance from the user to the panel and the target angle to calculate the magnification by which the resolution of the two-dimensional image is to be adjusted, before determining the resolution adjustment magnification of the image, it is first necessary to determine the intersection point between the user's line of sight and the panel. This intersection point is usually the focal point of the user's eyes and may be acquired through the eye tracking technology. Once the intersection point is determined, a reference area may be defined around this point, for example, an area including a predetermined number of pixel points centered on the intersection point, and this area includes the area that the user is concerned about. The size of the reference area may be preset. Next, the computing device calculates the proportion of the reference area occupied on the actual display screen using the distance and the target angle. For example, the computing device may use the distance and the target angle to calculate a projection area of the reference area on the display screen, such as using a Model View Projection (MVP) matrix in combination with the distance and the target angle to calculate the projection area of the reference area on the display screen. After the reference area is projected onto the display screen, the computing device calculates the occupancy ratio between the projection area and the total display screen area, and then determines the resolution adjustment magnification through the occupancy ratio, the original resolution of the image, and the resolution of the display screen.

Finally, at block 208, the computing device 102 re-renders the two-dimensional image for display on the panel based on the rendering instruction and the magnification. After obtaining the rendering instruction and the magnification to which the resolution is to be adjusted, the computing device 102 may use this information to re-render the image displayed on the panel.

In some embodiments, in order to reduce resource consumption, the resolution of the image may only be adjusted for the area of interest that the user's eyes are gazing at. For example, on the basis of the user's eye tracking and line-of-sight method, it is necessary to first determine the target area related to the user's line of sight. After measuring and determining the line-of-sight direction by the eye tracking technology, the target area may be determined based on the line-of-sight direction and a predetermined angle, the predetermined angle is an opening angle of a cone, for example, the predetermined angle is 30 degrees. The determination of the target area is determined by a cone geometric model. For example, the user's gaze point is the starting point of the cone, the predetermined angle is the opening angle of the cone, and the cone is formed by expanding outward, then the intersection of the cone and the panel, that is, a plane where the cone intersects the panel is the target area. Then the image portion corresponding to the target area is rendered based on the magnification calculated previously. Because this image portion is the area that the user currently cares most about, dynamic adjustment of the resolution is required to ensure clear display. In addition to the target area, there are other areas in the two-dimensional image, which are generally areas that the current user does not pay attention to, and may be rendered based on the previous resolution and rendering instruction. Finally, the computing device combines these two parts together, and uses an accurate synthesis technology to ensures smooth transition and the details of each area meet the user's detail requirements. After the above steps, the computing device will generate an updated two-dimensional image, including the target area portion with resolution dynamically adjusted based on the user's line of sight and the remaining area of the normal resolution.

Through this method, through accurate eye tracking and line-of-sight analysis, the two-dimensional image is re-rendered based on the user's angle and line-of-sight direction, providing the user with a clear visual experience, better meeting the user's requirements for high-definition and immersive three-dimensional virtual space, and improving the user experience.

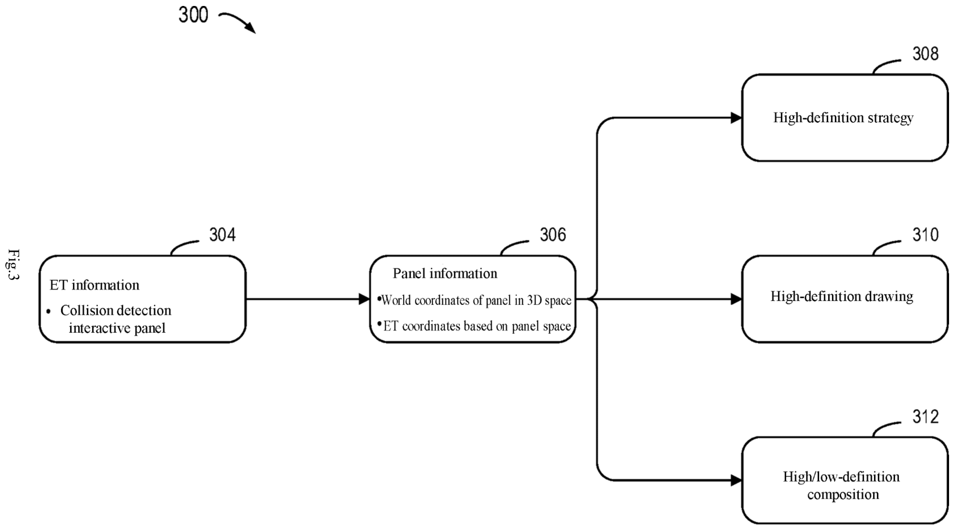

The schematic diagram of the example method for rendering an image according to some embodiments of the present disclosure is described above with reference to Fig. 2, and the flowchart of the example process for rendering an image according to some embodiments of the present disclosure is described below with reference to Fig. 3. The example process 300 in Fig. 3 may be processed by the computing device 102 in Fig. 1 or any suitable computing device.

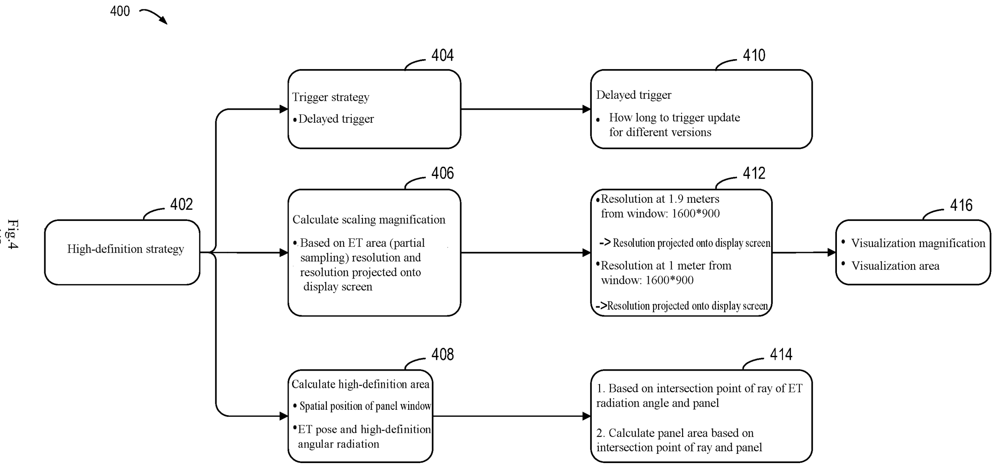

At block 304, the computing device 102 uses eye tracking (ET) data to analyze the user's line-of-sight trajectory, and uses a collision detection technology to determine whether the user's line of sight intersects with an interactive panel (virtual interface), thereby determining the user's area of interest and performing corresponding rendering and interaction optimization for this area. At block 306, a global position of the interactive panel in the 3D space is represented by a world coordinate system to determine an absolute position and orientation of the panel in the virtual environment. The user's eye tracking (ET) coordinates are calculated based on a local coordinate system of the panel, rather than the global coordinate system. By transforming the position of the eye tracking point in the world coordinates and mapping it to the local coordinate system of the panel, the user's gaze point on the panel may be accurately located. Then, based on the interaction between the eye tracking data and the collision body detection in the 3D space, the intersection area of the user's line of sight and the interactive panel may be determined, and the position of the panel in 3D coordinates may be calculated. At the same time, transforming the eye tracking line-of-sight data to the local coordinate system of the panel may provide accurate reference data for subsequent high-definition rendering and interaction optimization. Finally, in high-definition rendering of the UI, it is necessary to apply a high-definition strategy 308 for high-definition drawing 310 and high/low-definition composition 312, which will be described in conjunction with Figs. 4 to 7.

The high-definition strategy is described below with reference to Fig. 4, which illustrates a schematic diagram of an example of a high-definition strategy in rendering an image according to some embodiments of the present disclosure. In an example 400, at block 402, the high-definition strategy is a comprehensive strategy system, including a trigger strategy 404, calculating a scaling magnification 406, and calculating a high-definition area 408. At the trigger strategy of block 404, the trigger strategy is a delayed trigger. At the delayed trigger of block 410, when a change in the image of the interactive panel is detected after the user operates the application, the version changes, which triggers an update. At block 406, the scaling magnification between two screens is calculated based on the resolution of a partial sampling area of eye tracking and the resolution projected onto a display screen (such as the screen of VR glasses). The partial sampling of the eye tracking area refers to using a higher resolution in the area where the line of sight is concentrated and a lower resolution in the peripheral area, thereby saving computing resources. For example, at block 412, at a distance of 1.9 meters from the window, the resolution is 1600*900, and the resolution projected onto the display screen is calculated. At a distance of 1 meter from the window, since the viewing distance is closer, a higher resolution may be required. The scaling magnification calculated at block 406 based on the resolution of the eye tracking area and the resolution projected onto the display screen may further determine the visualization magnification for adjusting the image display ratio based on the scaling magnification and the visualization area for determining the size of the rendering area and detail display at block 416.

Finally, the high-definition area is calculated at block 408. First, the position of the display panel in the actual space is determined, that is, the distance and relative angle between the panel and the center of the user's line of sight. This position is critical for determining the range of high-definition rendering, and an incorrect position may affect the alignment between eye tracking and the high-definition area. The area that needs to display high-definition details may be calculated by combining the pose of the eye tracking (ET) system and the radiation range of the user's viewing angle. At block 414, the panel area may be calculated based on the intersection point of the ray of the ET radiation angle and the panel. The line-of-sight angle range formed by the gaze direction is obtained based on the eye tracking (ET) system and an intersection point is formed between the ray extending along the ET radiation angle from the eyes and the panel, the intersection point represents the precise position of the user's gaze point, that is, the focal point. The system generates a circle or an ellipse with this ray as the center line. In the case that the ray extending from the user is perpendicular to the panel, the formed panel area is a circle centered on the ray. In the case that the ray extending from the center of the line of sight of the user is not perpendicular to the panel, the formed panel area is an ellipse with the ray as the center line.

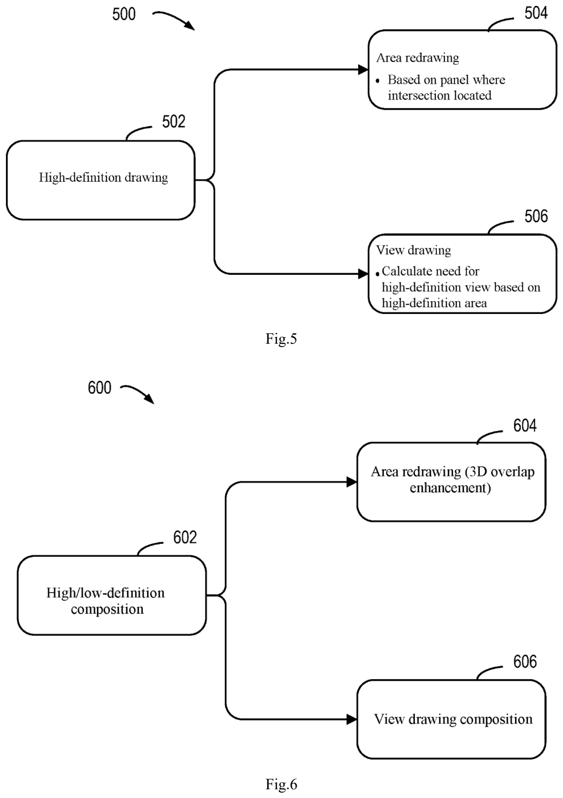

Fig. 5 illustrates an example for high-definition drawing in Fig. 3. In an example 500, at block 502, high-definition drawing includes two parts: area redrawing 504 and view drawing 506. The area redrawing 504 is to redraw the high-definition display area on the panel after determining the high-definition display area, so as to ensure that the area gazed at by the user always maintains the highest quality display. The view drawing is to calculate the view that needs high-definition rendering, that is, the high-definition view, based on the high-definition area. The user's gaze point is obtained by the eye tracking system, and the system calculates the size and position of the gaze area and dynamically draws high-definition details based on this area. In this way, only the gaze area uses a high-resolution image, and the non-gaze area uses a lower resolution, thereby optimizing rendering performance.

Fig. 6 illustrates an example of high/low-definition composition in Fig. 3. In an example 600, the high/low-definition composition at block 602 includes area redrawing (3D overlap enhancement) 604 and view drawing composition 606. 3D overlap is a technology that enhances the user's visual experience by superimposing a 3D image onto a real-world scene. The combination of high/low-definition composition technology and 3D overlap enhancement means that the enhanced 3D element may be displayed at a high resolution in the area gazed at by the user (such as the corresponding pattern that the user needs to operate), while the rest of the unimportant background part is displayed at a low resolution. Theview drawing composition 606 refers to the process of compositing the view in the final calculated high-definition area and the image in the low-definition area onto the screen. The final displayed image may ensure that the view seen by the user presents clear details in the high-definition area, while the rest may maintain a smooth viewing experience, reducing performance consumption to a certain extent.

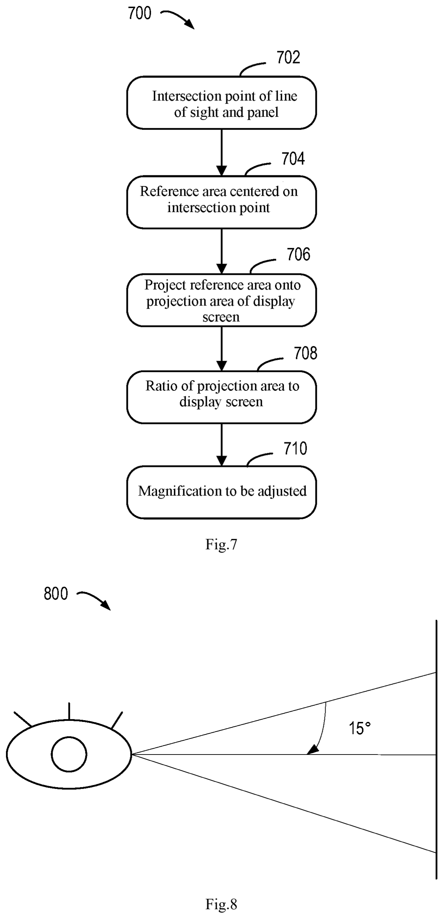

Fig. 7 illustrates a flowchart of an example method for resolution magnification adjustment according to some embodiments of the present disclosure. The method may be performed by the computing device 102 in Fig. 1 or any suitable device. In an example 700, at 702, the computing device may determine the intersection point of the line of sight and the panel. For example, first, the line of sight emitted from the gaze point to the panel is determined, and the line of sight has an intersection point with the panel. At 704, the computing device determines a reference area c entered on the intersection point. For example, a square reference area of 200 pixels * 200 pixels is determined centered on the intersection point. Then, at block 706, the reference area is projected onto the projection area of the display screen. For example, the reference area is projected onto the projection area of the display screen through matrix transformation. Then at 708, the ratio of the projection area to the display screen is calculated. The occupancy ratio of the reference area on the display screen may be determined based on the relative ratio of the number of pixels in the projection area to the number of pixels in the display screen. Then, at 710, the magnification to be adjusted is calculated based on the ratio, the resolution of the image in the reference area, and the resolution of the display screen.

Fig. 8 illustrates an example diagram of an example method for a field of view at a vertical viewing angle according to some embodiments of the present disclosure. In an example 800, when the angle between the user's line of sight and the panel is 90 degrees, and when the cone angle of the cone formed by the field of view is 15 degrees, the target area that the user focuses on at this time is a circle centered on the intersection point of the ray perpendicular to the panel emitted from the user's field of view, that is, the area where the cone and the panel overlap.

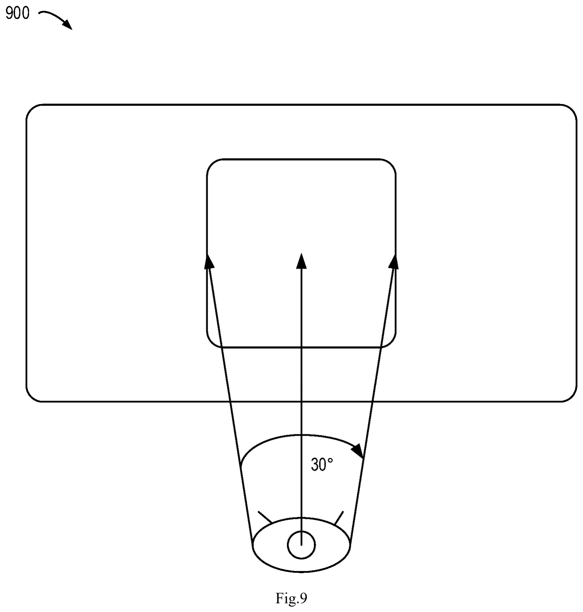

Fig. 9 illustrates a schematic diagram of an example method for a high-definition area range at a vertical viewing angle according to some embodiments of the present disclosure. In an example 900, when the user views the high-definition pattern on the panel, the area within the square is the area that the user mainly focuses on, which is the target high-definition area, and the other areas are areas with less attention of the user, and the previous resolution may be used for rendering, and finally the high-definition area part and the previous low-resolution rendered part are combined to form a complete two-dimensional image.

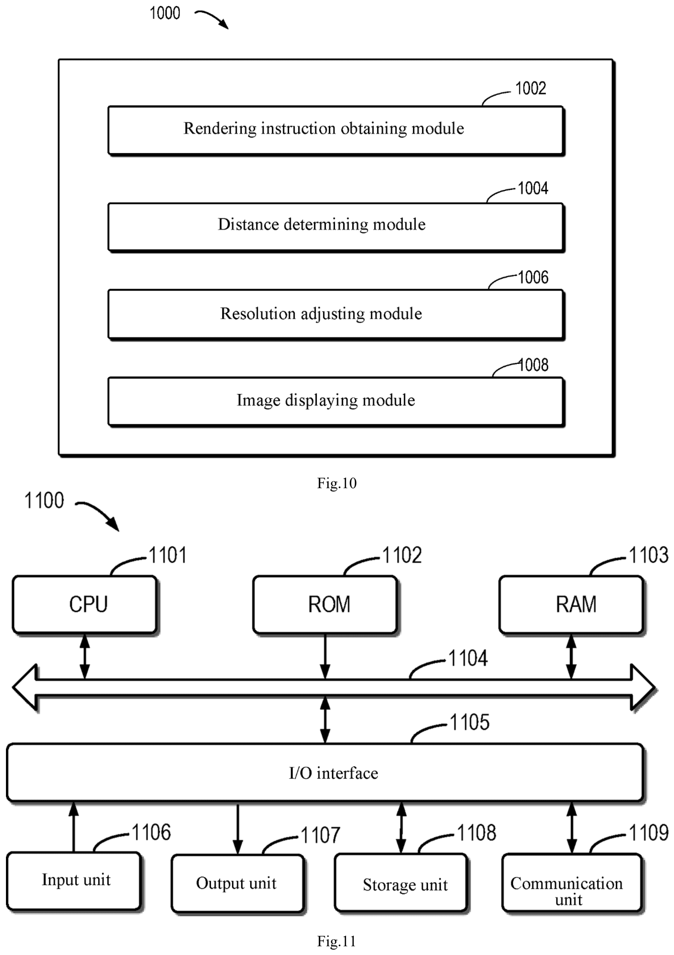

Fig. 10 illustrates a schematic block diagram of an apparatus for rendering an image according to some embodiments of the present disclosure. As shown in Fig. 10, the apparatus 1000 includes a rendering instruction obtaining module 1002 configured to obtain, in response to a change in a position of a user, a rendering instruction for a two-dimensional image on a panel viewed by the user in a virtual space; a distance determining module 1004 configured to determine a distance from the user to the panel; a resolution adjusting module 1006 configured to determine, based at least on the distance, a magnification by which a resolution of the two-dimensional image is to be adjusted; and an image displaying module 1008 configured to re-render the two-dimensional image for display on the panel based on the rendering instruction and the magnification.

In some embodiments, the resolution adjusting module 1006 includes: a target angle determining module configured to determine a target angle between a line of sight of the user and the panel; and a first magnification determining module configured to determine, based on the distance and the target angle, the magnification by which the resolution of the two-dimensional image is to be adjusted.

In some embodiments, the first magnification determining module includes: an intersection point determining module configured to determine an intersection point of the line of sight and the panel; a reference area determining module configured to determine a reference area including a predetermined number of pixel points and centered on the intersection point; an occupancy ratio determining module configured to determine an occupancy ratio of the reference area on a display screen based on the distance and the target angle; and a second magnification determining module configured to determine the magnification based on the occupancy ratio, a resolution of the image, and a resolution of the screen.

In some embodiments, the occupancy ratio determining module includes: a projection area determining module configured to determine a projection area of the reference area projected onto the display screen, based on the distance and the target angle; and an occupancy ratio determining module configured to determine a ratio of the projection area to the display screen as the occupancy ratio.

In some embodiments, the image displaying module 1008 includes: a corresponding angle target area determining module configured to determine a target area corresponding to the predetermined angle on the panel based on a predetermined angle related to eye tracking; and a two-dimensional image re-rendering module configured to re-render the two-dimensional image based on the rendering instruction, the magnification and the target area.

In some embodiments, the corresponding angle target area determining module includes: a line-of-sight direction determining module configured to determine a line-of-sight direction of the line of sight of the user; and a target area determining module configured to determine the target area on the panel based on the line-of-sight direction and the predetermined angle.

In some embodiments, the target area determining module includes: a cone viewing angle determining module configured to determine a cone expanding outward by a predetermined angle from a gaze point and centered on the line of sight; an interaction area determining module configured to determine an interaction area between the cone and the panel based on the target angle; and a target area selecting module configured to determine the interaction area as the target area.

In some embodiments, the two-dimensional image re-rendering module is configured to: a target image portion rendering module configured to render a target image portion in the two-dimensional image corresponding to the target area based on a resolution having the magnification and the rendering instruction; a remaining image rendering module configured to render a remaining image portion in the two-dimensional image based on a previous resolution and the rendering instruction; and an image combining module configured to generate the two-dimensional image by combining the target image portion and the remaining image portion.

In some embodiments, the apparatus 1000 further includes: a two-dimensional image rendering module configured to render the two-dimensional image based on the rendering instruction; and an instruction cache module configured to store the rendering instruction in a cache.

In some embodiments, the apparatus 1000 further includes a two-dimensional image processing module configured to perform spatial effect processing and sampling on the two-dimensional image.

Fig. 11 shows a schematic block diagram of an example device 1100 that may be used to implement an embodiment of the present disclosure. The computing device 102 in Fig. 1 may be implemented using the device 1100. As shown in the figure, the device 1100 includes a central processing unit (CPU) 1101 that may perform various appropriate actions and processes according to computer program instructions stored in a read-only memory (ROM) 1102 or computer program instructions loaded from a storage unit 1108 into a random access memory (RAM) 1103. In the RAM 1103, various programs and data required for the operation of the device 1100 may also be stored. The CPU 1101, ROM 1102, and RAM 1103 are connected to each other through a bus 1104. An input/output (I/O) interface 1105 is also connected to the bus 1104.

Multiple components in the device 1100 are connected to the I/O interface 1105, including: an input unit 1106, such as a keyboard, a mouse, etc.; an output unit 1107, such as various types of displays, speakers, etc.; the storage unit 1108, such as a magnetic disk, an optical disc, etc.; and a communication unit 1109, such as a network card, a modem, a wireless communication transceiver, etc. The communication unit 1109 allows the device 1100 to exchange information/data with other devices over a computer network such as Internet and/or various telecommunication networks.

Each process and treatment described above, such as the method 200 and the process 300, may be executed by the processing unit 1101. For example, in some embodiments, the method 200 and the process 300 may be implemented as a computer software program, which is tangibly contained in a machine-readable medium, such as the storage unit 1108. In some embodiments, a portion or an entirety of the computer program may be loaded and/or installed into the device 1100 via the ROM 1102 and/or the communication unit 1109. When the computer program is loaded into the RAM 1103 and executed by the CPU 1101, one or more actions of the example method 200 and the process 300 described above may be executed.

The present disclosure may be a method, an apparatus, a system, and/or a computer program product. The computer program product may include a computer-readable storage medium having computer-readable program instructions thereon for implementing various aspects of the present disclosure.

The computer-readable storage medium may be a tangible device that may hold and store instructions used by an instruction execution device. The computer-readable storage medium may be, for example, but not limited to, an electrical storage device, a magnetic storage device, an optical storage device, an electromagnetic storage device, a semiconductor storage device, or any suitable combination of the above. More specific examples (a non-exhaustive list) of the computer-readable storage medium include: a portable computer disk, a hard disk, a random access memory (RAM), a read-only memory (ROM), an erasable programmable read-only memory (EPROM or flash memory), a static random access memory (SRAM), a portable compact disk read-only memory (CD-ROM), a digital versatile disk (DVD), a memory stick, a floppy disk, a mechanical encoding device, such as a punch card or a raised structure in a groove with instructions stored thereon, and any suitable combination of the above. The computer-readable storage medium used here is not construed as an instantaneous signal itself, such as a radio wave or other freely propagating electromagnetic waves, electromagnetic waves propagating through a waveguide or other transmission media (for example, light pulses through an optical fiber cable), or electrical signals transmitted through wires.

The computer-readable program instructions described herein may be downloaded from a computer-readable storage medium to various computing/processing devices, or downloaded to an external computer or an external storage device through a network, such as Internet, a local area network, a wide area network, and/or a wireless network. The network may include a copper transmission cable, an optical fiber transmission, a wireless transmission, a router, a firewall, a switch, a gateway computer, and/or an edge server. A network adapter card or a network interface in each computing/processing device receives the computer-readable program instructions from the network and forwards the computer-readable program instructions for storage in a computer-readable storage medium in the various computing/processing devices.

The computer program instructions for performing the operations of the present disclosure may be assembly instructions, instruction set architecture (ISA) instructions, machine instructions, machine-related instructions, microcode, firmware instructions, state setting data, or source code or object code written in any combination of one or more programming languages, the programming languages including object-oriented programming languages, such as Smalltalk, C++, etc., and conventional procedural programming languages, such as "C" language or similar programming languages. The computer-readable program instructions may be executed entirely on a user's computer, partly executed on a user's computer, executed as an independent software package, partly executed on a user's computer and partly executed on a remote computer, or entirely executed on a remote computer or a server. In the case of involving a remote computer, the remote computer may be connected to a user's computer through any kind of network, including a local area network (LAN) or a wide area network (WAN), or it may be connected to an external computer (for example, connected by using Internet provided by an Internet service provider). In some embodiments, by personalizing an electronic circuit, such as a programmable logic circuit, a field programmable gate array (FPGA) or a programmable logic array (PLA), using state information of computer-readable program instructions, the electronic circuit may execute the computer-readable program instructions, thereby implementing various aspects of the present disclosure.

Various aspects of the present disclosure are described herein with reference to flowcharts and/or block diagrams of methods, apparatuses (systems), and computer program products according to embodiments of the present disclosure. It would be appreciated that each block of the flowcharts and/or block diagrams, and combinations of blocks in the flowcharts and/or block diagrams, may be implemented by computer-readable program instructions.

These computer-readable program instructions may be provided to a processing unit of a general-purpose computer, a special-purpose computer, or other programmable data processing apparatus to produce a machine, such that the instructions, when executed by the proc essing unit of the computer or other programmable data processing apparatus, produce an apparatus for implementing a function/action specified in one or more blocks of the flowcharts and/or block diagrams. These computer-readable program instructions may also be stored in a computer-readable storage medium, and the instructions cause a computer, a programmable data processing apparatus, and/or other devices to work in a specific manner, so that the computer-readable medium storing the instructions includes a manufactured product, which includes instructions for implementing various aspects of the function/action specified in one or more blocks of the flowcharts and/or block diagrams.

The computer-readable program instructions may also be loaded onto a computer, other programmable data processing apparatus, or other devices, so that a series of operation steps are executed on the computer, other programmable data processing apparatus, or other devices to produce a computer-implemented process, so that the instructions executed on the computer, other programmable data processing apparatus, or other devices implement the function/action specified in one or more blocks of the flowcharts and/or block diagrams.

The flowcharts and block diagrams in the drawings show the possibly implemented architectures, functions, and operations of the system, method, and computer program product according to multiple embodiments of the present disclosure. In this regard, each block in the flowchart or block diagram may represent a module, a program segment, or a portion of instruction, and the module, program segment, or portion of instruction contains one or more executable instructions for implementing the specified logical function. In some alternative implementations, the functions marked in the blocks may also occur in an order different from that marked in the drawings. For example, two consecutive blocks may actually be performed substantially in parallel, or they may sometimes be performed in the reverse order, depending on the functions involved. It should also be noted that each block in the block diagrams and/or flowcharts, and combinations of the blocks in the block diagrams and/or flowcharts may be implemented by a special-purpose hardware-based system that perform specified functions or actions, or may be implemented by a combination of special-purpose hardware and computer instructions.

The embodiments of the present disclosure have been described above, and the above description is exemplary, non-exhaustive, and not limited to the disclosed embodiments. Many modifications and variations will be apparent to those of ordinary skill in the art without departing from the scope of the described embodiments. The choice of terms used herein is intended to best explain the principles, practical applications, or technical improvements to the technologies in the market of the embodiments, or to enable other those of ordinary skill in the art to understand the embodiments disclosed herein.

## Claims

1. A method for rendering an image, comprising:
obtaining (202), in response to a change in a position of a user, a rendering instruction for a two-dimensional image on a panel viewed by the user in a virtual space;
determining (204) a distance from the user to the panel;
determining (206), based at least on the distance, a magnification by which a resolution of the two-dimensional image is to be adjusted; and
re-rendering (208) the two-dimensional image for display on the panel based on the rendering instruction and the magnification.

2. The method of claim 1, wherein determining the magnification by which the resolution of the two-dimensional image is to be adjusted comprises:
determining a target angle between a line of sight of the user and the panel; and
determining, based on the distance and the target angle, the magnification by which the resolution of the two-dimensional image is to be adjusted.

3. The method of claim 2, wherein determining, based on the distance and the target angle, the magnification by which the resolution of the two-dimensional image is to be adjusted comprises:
determining an intersection point of the line of sight and the panel;
determining a reference area comprising a predetermined number of pixel points and centered on the intersection point;
determining an occupancy ratio of the reference area on a display screen based on the distance and the target angle; and
determining the magnification based on the occupancy ratio, a resolution of the image and a resolution of the display screen.

4. The method of claim 3, wherein determining the occupancy ratio of the reference area on the display screen comprises:
determining a projection area of the reference area projected onto the display screen based on the distance and the target angle; and
determining a ratio of the projection area to the display screen as the occupancy ratio.

5. The method of any of claims 1 to 4, wherein re-rendering the two-dimensional image for display on the panel comprises:
determining a target area corresponding to the predetermined angle on the panel based on a predetermined angle related to eye tracking; and
re-rendering the two-dimensional image based on the rendering instruction, the magnification and the target area.

6. The method of claim 5, wherein determining the target area corresponding to the predetermined angle on the panel comprises:
determining a line-of-sight direction of the line of sight of the user; and
determining the target area on the panel based on the line-of-sight direction and the predetermined angle.

7. The method of claim 6, wherein determining the target area on the panel based on the line-of-sight direction and the predetermined angle comprises:
determining a cone expanding outward by the predetermined angle from a gaze point and centered on the line of sight;
determining an interaction area between the cone and the panel based on the target angle; and
determining the interaction area as the target area.

8. The method of any one of claims 5 to 7, wherein re-rendering the two-dimensional image based on the rendering instruction, the magnification and the target area comprises:
rendering a target image portion in the two-dimensional image corresponding to the target area based on a resolution having the magnification and the rendering instruction;
rendering a remaining image portion in the two-dimensional image based on a previous resolution and the rendering instruction; and
generating the two-dimensional image by combining the target image portion and the remaining image portion.

9. The method of any one of claims 1 to 8, further comprising:
rendering the two-dimensional image based on the rendering instruction; and
storing the rendering instruction in a cache.

10. The method of any one of claims 1 to 9, wherein the panel is for a two-dimensional application.

11. The method of any one of claims 1 to 10, further comprising:
performing spatial effect processing and sampling on the two-dimensional image.

12. An apparatus (1000) for rendering an image, comprising:
a rendering instruction obtaining module (1002) configured to obtain, in response to a change in a position of a user, a rendering instruction for a two-dimensional image on a panel viewed by the user in a virtual space;
a distance determining module (1004) configured to determine a distance from the user to the panel;
a resolution adjusting module (1006) configured to determine, based at least on the distance, a magnification by which a resolution of the two-dimensional image is to be adjusted; and
an image displaying module (1008) configured to re-render the two-dimensional image for display on the panel based on the rendering instruction and the magnification.

13. An electronic device (1100), comprising:
at least one processor (1101); and
a storage apparatus (1102, 1103, 1108) for storing at least one program that, when executed by the at least one processor (1101), causes the at least one processor (1101) to perform the method according to any of claims 1 to 11.

14. A computer-readable storage medium having a computer program stored thereon, wherein the computer program, when executed by a processor, implements the method according to any of claims 1 to 11.

15. A computer program product comprising a computer program that, when executed by a processor, implements the method according to any of claims 1 to 11.
